# EUROPEAN PATENT APPLICATION

(11) **EP 4 556 331 A1**
(43) Date of publication of application: **21.05.2025**
(21) Application number: 23210102.2
(22) Date of filing: 15.11.2023
(51) Int. Cl.: B60T 13/74, F16D 65/18, F16D 66/00

(54) **ELECTROMECHANICAL BRAKE CALIPER ASSEMBLY WITH INTEGRATED BRAKE FORCE SENSOR**

(71) Applicant: Continental Automotive Technologies GmbH, 30175 Hannover (DE)
(72) Inventor: Marne, Shubham, 60488 Frankfurt am Main (DE); V, Aravind, 60488 Frankfurt am Main (DE); Tarandek, Kristijan, 60488 Frankfurt am Main (DE); Schirling, Andreas, 60488 Frankfurt am Main (DE)
(74) Representative: Continental Corporation

(57) **Abstract**

The present invention generally relates to an electromechanical
brake caliper assembly which can be used, for example, in motor vehicles as part of a braking system. The invention also relates to a braking system for a motor vehicle with such a brake arrangement.

The invention therefore discloses an electromechanical operable brake caliper, in particular for motor vehicles, comprising:
- a caliper cylinder (10) having a proximal open end (11) and a distal end (12) defining a bottom (14), the distal end and the proximal end further defining a body axis (13),
- a loading ring (20), located inside the caliper cylinder (10) and movable in an axial direction parallel to the body axis (13), the loading ring (20) is able to receive a force Fₐ in operation of the brake caliper assembly,
- a sensing ring (30), located inside the caliper cylinder (10) between the loading ring (20) and the bottom (14), wherein
- the sensing ring (30) comprises at least one bending element (31) which can be deformed when the force Fₐ is applied to,
- the loading ring (20) is designed to transfer the force Fₐ to the bending element of the sensing ring (30) which can cause the at least one bending element (31) to be deformed,
- the sensing ring (30) further comprises at least one measuring device (50) for the detection of stretching and/or compressing deformations, and wherein
- the measuring device (50) is located at or attached to the bending element (31) of the sensing ring (30).

## Description

The present invention generally relates to an electromechanical brake caliper assembly which can be used, for example, in motor vehicles as part of a braking system. The invention also relates to a braking system for a motor vehicle with such a brake arrangement.

Brake-by-wire technology in the automotive industry is becoming more and more important these days. Brake-by-wire technology is the ability to control brakes of a motor vehicle through electrical means, for example to operate an electromechanical brake caliper assembly.

Such technology may replace conventional components such as pumps or hydraulic lines. Instead, electronic sensors and actuators are used for the by-wire or electromechanical brake systems. Load and/or force sensors can be used to measure for example a braking force in an electromechanical brake caliper, and actuators can be used to apply a desired brake force in order to press at least one friction member against another friction brake partner.

However, it is sometimes difficult to integrate such a load sensor into an electromechanical brake caliper assembly because of limited available space. In addition, the conditions to operate such load sensors are strong, for example because of heat. In addition, the existing force sensors currently used in such electromechanical brake calipers are stand alone and therefore are installed separately, because of which there is an overall increase in the cost and the size of the system.

Accordingly, it is desirable to have load sensors for reliable measuring a brake force in such electromechanical brake calipers with high accuracy, which do not have or at least mitigate the above-mentioned disadvantages.

This object is surprisingly achieved by the present invention by an electromechanical operable brake caliper, in particular for motor vehicles, and a method for measuring a load in an electromechanical operable brake caliper according to one of the independent claims. Preferred embodiments and further features of the invention can be found in the respective dependent claims.

In a first aspect, the invention therefore provides an electromechanical operable brake caliper, comprising:
- a caliper cylinder having a proximal open end and a distal end defining a bottom, the distal end and the proximal end further defining a body axis,
- a loading ring, located inside the caliper cylinder and movable in an axial direction parallel to the body axis, the loading ring is able to receive a force Fₐ in operation of the brake caliper assembly,
- a sensing ring, located inside the caliper cylinder between the loading ring and the bottom, wherein
- the sensing ring comprises at least one bending element which can be deformed when the force Fₐ is applied to,
- the loading ring is designed to transfer the force Fₐ to the bending element of the sensing ring which can cause the bending element to be deformed,
- the sensing ring further comprises at least one measuring device for the detection of stretching and/or compressing deformations, and wherein
- the measuring device is located at or attached to the at least one bending element of the sensing ring.

The electromechanical operable brake caliper can be used for by-wire brake systems for motor vehicles, in particular for electromechanical operable brake calipers. A motor vehicle means a vehicle with axles wherein at least one of these axles comprise steerable wheels. The brake system can include electromechanical by-wire wheel brakes, also referred to as EMB ("EMB" = electromechanical operable brake), whereby preferably at least two or all wheel brakes of the motor vehicle can be designed as electromechanical controllable wheel brakes.

The electromechanical wheel brake can be configured as an electromechanical disc brake, for example, in which a clamping force can be generated by means of an electric motor and a rotational/translation gearbox. The clamping force refers to the force with which the brake pads are pressed against the brake disc. During operation, this generates a corresponding braking torque on the corresponding wheel. Such a wheel brake assembly is typically referred to a brake caliper.

On the other hand, the electromechanical wheel brake can also be designed as an electromechanical drum brake, in which the motor/transmission unit actuates a spreading module that presses the brake pads against the brake drum with a spreading force specified on the basis of the requested desired deceleration and thus generates a corresponding braking torque. Although the description of this invention focuses on electromechanical operable brake calipers, it should be understood that the general principle of the invention can also be transferred to electromechanical operable drum brakes.

The caliper cylinder of such an electromechanical operable brake caliper in accordance with the invention is having a proximal open end and a distal end at the opposite side, the proximal end and the distal end both define a body axis. In the proximal open end of the caliper cylinder, an actuating element, for example a piston, can be inserted. In operation, the piston can be moved axially to press at least one friction member, for example a brake pad or friction lining, against another friction brake partner. The brake partner can be a braking disc.

In operation, i.e. when applying a brake force in order to decelerate and brake the wheel of the motor vehicle, a reaction force is produced by the brake caliper. This reaction force can be transferred to a loading ring, for example by the piston or any other actuating element.

The loading ring can be located inside the caliper cylinder and movable in an axial direction parallel to the body axis of the caliper cylinder. The loading ring can be substantially in the form of a disc and can be substantially installed perpendicular to the body axis. The loading ring is able to receive a force Fₐ, for example the reaction force, that is produced by the piston of the brake caliper in operation.

In the meaning of the invention, this force Fₐ can be transferred from the loading ring to a sensing ring. The sensing ring can be located also inside the caliper cylinder, preferably between the loading ring and the bottom of the caliper cylinder. The sensing ring can be substantially in the form of a disc and can be substantially installed perpendicular to the body axis. The sensing ring further comprises at least one bending element which can be deformed when a force is applied to it.

Preferably, the sensing ring can be designed such that a force Fₐ that is applied to the sensing ring by the loading ring can be transferred to a deformation of the at least one bending element. The deformation can be limited by additional means to a specific amount, for example by spacers.

The sensing ring may comprise at least one measuring device for the detection of stretching and/or compressing deformations. In accordance with the invention, this at least one measuring device can be located at or attached to the at least one bending element which is subject to deformations. In this manner, a force Fₐ from the loading ring may lead to a deformation of the bending element that can be detected and measured by the measuring device.

The force that is measured by the measuring device when the brake caliper is in operation can be used to further control the required brake force and therefore to further control the electromechanical operable brake caliper.

Thus, in operation the loading ring of the brake caliper acts as a force transferring element. In addition, the loading ring may prevent the measuring device since it may close the open end of the caliper cylinder and protect the measuring device.

The bending element may comprise at least one beam, preferably more than one beam. The beam may radially projecting inwards to the center of the sensing ring from an outer portion of the sensing ring. It is preferred that the ends of the beams are designed such that they can move in an axial direction when under a load.

In other word, if a force, for example a reaction force Fₐ, is applied to the loading ring and transferred to the beams of the sensing ring, these beams undergo bending action thus introducing deflections. In accordance with the invention, these deflections can be measured. For this reason, the at least one measuring device can be located at the beam.

In a preferred embodiment of the invention, the measuring device may comprise strain gauges. The bending of the beam may introduce deflections in the strain gauges that can be detected and measured. For this reason, the strain gauges can be configured in a Wheatstone bridge configuration in order to measure or evaluate the change of the electrical resistance of the strain gauges when deforming.

There are many options to place the measuring devices on the beams, depending on the number of beams, the side of the beam on which the measuring device can be placed, or the number of measuring devices at all, for example. In general, the more measuring devices are foreseen, the better results and the higher accuracy of the measurement can be achieved.

One embodiment of the invention may provide at least one measuring device which is located on the side of the beam that is directed to the loading ring.

One embodiment of the invention may provide at least one measuring device which is located on the side of the beam that is directed to the bottom of the caliper cylinder.

Just one more embodiment of the invention may provide at least two or a multiple of two measuring devices which are placed on opposite beams and/or at different sides of the beams. Such embodiments are suitable when the number of beams is at least two or a multiple of two.

In a preferred embodiment of the invention, the loading ring and/or the sensing ring comprise a cavity or recess to hold a printed circuit board. Thus, the printed circuit board can be placed, at least partially, between the loading ring and the sensing ring. In accordance with one embodiment of the invention, the printed circuit board, at least partially, is located between the beams of the sensing ring.

When located between the loading ring and the sensing ring, the printed circuit board can be protected against external forces. In addition, the invention therefore offers a cost-effective and space-saving method to place the printed circuit board which is necessary to operate the measuring device close to the measuring device. Such a placement of the printed circuit board may reduce the effort for electrical wiring to a minimum.

The measuring device can be coupled electrically to the printed circuit board. For this reason, the printed circuit board may comprise axially protruding contact pins for electrical contacting the printed circuit board. Some or all of these protruding contact pins may be led through an opening in the bottom to the outside of the caliper cylinder. Supply voltage and ground can be connected to the Wheatstone bridge configuration via two of such contact pins, for example.

If the strain gauges are arranged in such a standard full Wheatstone bridge configuration, an output voltage can be provided when there is a change in resistance of the strain gauges due to deflection in the sensing beams because of the load applied. Therefore, a third contact pin may be provided for a signal out or the output voltage of the Wheatstone bridge configuration, respectively. If required, the output voltage can be amplified and passed through an analog to digital converter (ADC). The so created value could be sent to an ECU where this value can be mapped to a force value from a calibration table, for example.

The loading ring may comprise at least on loading area which is designed to apply a force directly to the at least one bending element or the sensing beams, respectively. For this reason, the loading area may comprise an axially protruding circular region in the direction of the sensing ring, for example, or any kind of axially protruding pins corresponding to the location of the beams.

The caliper cylinder may comprise means for preventing the loading ring rotating. For example, axially oriented guide bars which extend along the inner wall of the caliper cylinder may prevent any rotational movement of the loading ring.

In a preferred embodiment of the invention, the bottom of the caliper cylinder and/or the loading ring and/or the sensing ring may comprise each a centric through-hole. These through-holes are therefore coaxial to each other, enabling a drive shaft for driving an actuator of the brake passing through.

In an additional aspect, the invention provides a motor vehicle, comprising at least one electromechanical operable brake caliper as described above, or two such electromechanical operable brake calipers or one for each wheel.

In just another aspect, the invention provides a method of measuring a force in an electromechanical operable brake caliper of a motor vehicle, preferably in an electromechanical operable brake caliper as described above, comprising at least one of the steps of
- applying a force Fₐ to a loading ring,
- transferring a force Fₐ to at least one bending element, preferably a beam, of a sensing ring,
- measuring the deflection of the bending element when the force Fₐ is applied to the loading ring by at least one measuring device which is attached to the bending element, preferably by multiple strain gauges,
- connecting the strain gauges to a Wheatstone's bridge configuration to provide a signal output in terms of small voltage changes,
- sending the signal output to a printed circuit board.

The above-mentioned method may further comprise at least one of the steps of
- comprising an amplifier to increase the signal,
- converting the signal output with ADC into a digital signal form,
- calibrating the brake force to be applied by the brake caliper being measured using these values.

Further details of the invention can be found in the description of the embodiments shown and the attached claims.

The drawings show:
- Fig. 1: a sectional view of an exemplary embodiment of an electromechanical operable brake caliper,
- Fig. 2: an exploded sectional view of the exemplary electromechanical operable brake caliper of Fig. 1,
- Fig. 3: another sectional view of the exemplary electromechanical operable brake caliper of Fig. 1,
- Fig. 4: another sectional view of the exemplary electromechanical operable brake caliper of Fig. 1,
- Fig. 5a: a front view of an exemplary embodiment of a caliper cylinder,
- Fig. 5b: a section view of the caliper cylinder of Fig. 5a,
- Fig. 6a: a top view of the caliper cylinder of Fig. 5a,
- Fig. 6b: an isometric view of the caliper cylinder of Fig. 5a,
- Fig. 7: an oblique view of an embodiment of an sensing ring,

- Figs. 8a, 8b: bottom and top views of potential arrangements of measurement devices on the sensing ring,
- Figs. 9a, 9b: an oblique view and a top view of further potential arrangements of measurement devices on the sensing ring,
- Fig. 10: a top view of an embodiment of a caliper cylinder,
- Fig. 11: an oblique view of the caliper cylinder of Fig. 10,
- Figs. 12a, 12b, 12c, 12d: different views of an embodiment of a loading ring, and
- Figs. 13a, 13b, 13c: different views of an embodiment of a printed circuit board.

For the sake of clarity, in the following detailed description of preferred embodiments, identical reference signs essentially refer to identical parts in or on these embodiments. However, in order to better illustrate the invention, the preferred embodiments depicted in the figures are not always drawn to scale.

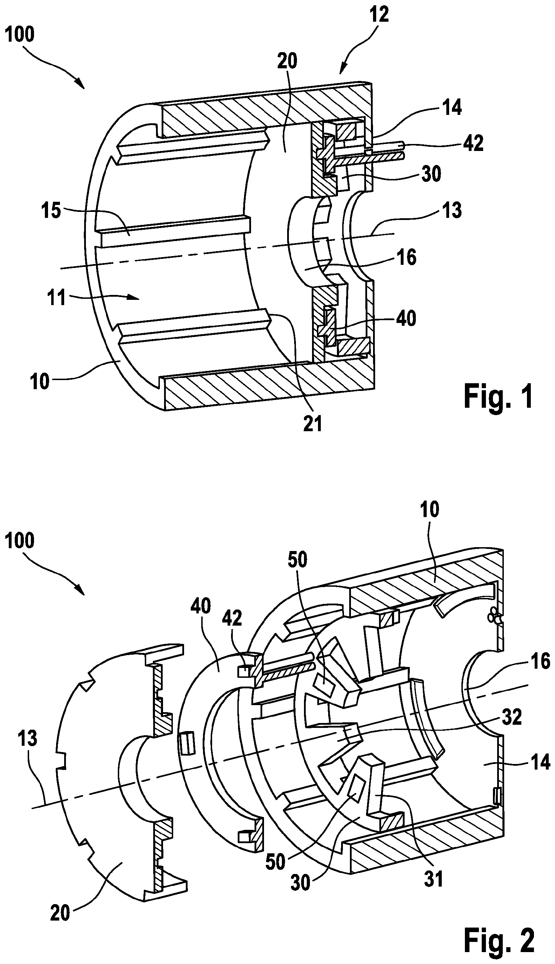

For reasons of clarity, only the elements of brake device that are relevant for the design of the approach according to the invention are shown. Fig. 1 shows a sectional view of an exemplary embodiment of an electromechanical operable brake caliper 100, in particular for motor vehicles.

The electromechanical operable brake caliper 100 comprises:
- a caliper cylinder 10 having a proximal open end 11 and a distal end 12 defining a bottom 14, the distal end and the proximal end further defining a body axis 13,
- a loading ring 20, located inside the caliper cylinder 10 and movable in an axial direction parallel to the body axis 13, the loading ring 20 is able to receive a force Fₐ in operation of the brake caliper assembly,
- a sensing ring 30, located inside the caliper cylinder 10 between the loading ring 20 and the bottom 14, wherein
- the sensing ring 30 comprises at least one bending element 31 which can be deformed when the force Fₐ is applied to,
- the loading ring 20 is designed to transfer the force Fₐ to the bending element of the sensing ring 30 which can cause the bending element 31 to be deformed,
- the sensing ring 30 further comprises at least one measuring device 50 for the detection of stretching and/or compressing deformations, and wherein
- the measuring device 50 is located at or attached to the bending element 31 of the sensing ring 30.

The electromechanical operable brake caliper 100 can be used for by-wire brake systems for motor vehicles, in particular for electromechanical operable brake calipers.

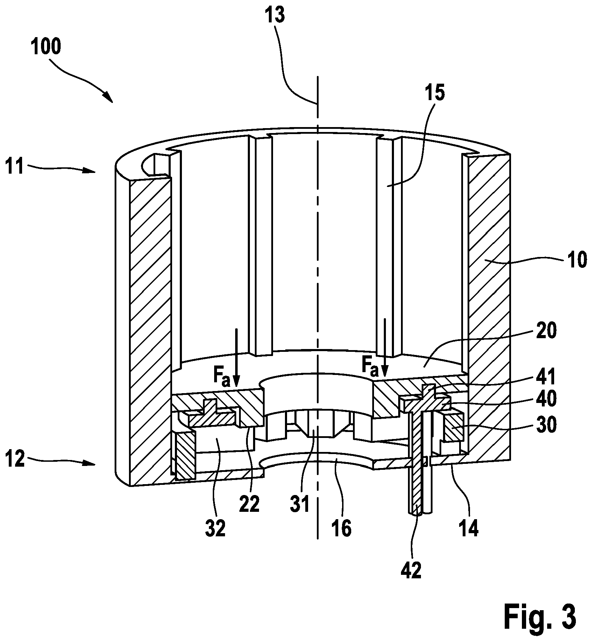

Fig. 2 shows an exploded sectional view of the exemplary electromechanical operable brake caliper of Fig. 1, and Fig. 3 just presents another sectional view of the exemplary electromechanical operable brake caliper of Fig. 1.

The caliper cylinder 10 as presented in Fig. 1 is having a proximal open end 11 and a distal end 12 at the opposite side, the proximal end 11 and the distal end 12 both define the body axis 13. In the proximal open end 11, an actuating element, for example a piston or an actuator (not shown), can be inserted. In operation, the actuator can be moved axially to press at least one friction member, for example a brake pad (not shown), against another friction brake partner, for example a braking disc (not shown).

In operation, i.e. when applying a brake force in order to decelerate and brake the wheel of the motor vehicle, a reaction force Fₐ is produced by the brake caliper 10. This reaction force Fₐ can be transferred to the loading ring 20 by the actuator or the piston or any other actuating element.

The loading ring 20 is located inside the caliper cylinder and movable in an axial direction parallel to the body axis 13 of the caliper cylinder 10. The loading ring 20 is formed like a disc and arranged perpendicular to the body axis 13. In this manner, the loading ring 20 is very good suitable to receive the reaction force Fₐ and further transfer this force Fₐ to the sensing ring 30, since the loading ring 20 provides a contact surface and a thickness that prevents twisting of the loading ring 20 when moving. The reaction force Fₐ can be applied by a piston of the brake caliper in operation, for example.

The sensing ring 30 is located inside the caliper cylinder 10 between the loading ring 20 and the bottom 14 of the caliper cylinder 10. The sensing ring 30 is in the form of a disc and perpendicular to the body axis 13. The sensing ring 30 comprises in the example eight bending elements which can be deformed when the force Fₐ is applied to them. Of course, also other numbers of such bending elements are conceivable and possible, for example only two, three, four, five, six or more such bending elements. A number of bending elements divisible by 2 is considered favorable in terms of a uniform coverage over the entire area of the loading ring 30, but not mandatory at all.

Thus, the sensing ring 30 is designed such that a force Fₐ that is applied to the sensing ring 30 by an axial movement of the loading ring 20 can be transferred into a deformation of the bending elements. The loading ring 20 allows for even distribution of the force Fₐ which may lead to more precise results of the measurement.

The deformation can be limited by additional means to a specific amount, for example by spacers arranged between the bottom 14 and the sensing ring 30. The bending elements are made of a material that is suitable for bending loads. It can be, for example, a plastic or metallic material or any combination thereof.

The sensing ring 30 further comprises one measuring device 50 for the detection of stretching and/or compressing deformations for specific bending elements 31. The measuring device 50 can be seen in Fig. 2, for example. Here, in total two such measuring devices 50 are shown. The measuring devices 50 are attached to every second bending element 31 which is considered favorable configuration for cost and accuracy reasons. A force Fₐ from the loading ring 20 may lead to a deformation of the bending element 31 that can be detected and measured by the measuring devices 50.

The force that is measured by the measuring device 50 when the brake caliper is in operation can be used to further control the required brake force and to further control the electromechanical operable brake caliper 100.

Thus, in operation the loading ring 20 of the brake caliper acts as a force transferring element. In addition, the loading ring 20 prevents the measuring device 50 since it closes the open end 11 of the caliper cylinder 10 and protects the measuring device 50.

The bending element 31 of the shown embodiments comprises one beam 32 each. In the shown examples, the sensing rings 30 include eight such beams 32. The beam 32 radially projects inwards to the center of the sensing ring 30 from an outer portion of the sensing ring 30. The ends of the beams 32 are designed such that they can move in an axial direction when under a load.

In the embodiments shown in Figs. 1, 2 and 3, the measuring devices 50 each comprise strain gauges. The bending of the beams 32 introduce deflections in the strain gauges that can be detected and measured. The strain gauges are arranged in a Wheatstone bridge configuration in order to measure or evaluate the change of the electrical resistance of the strain gauges when deforming.

There are many options to place the measuring devices 50 or the strain gauges, respectively, on the beams 32, depending on the number of beams 32, the side of the beam 32 on which the measuring device 50 can be placed, or the number of measuring devices 50 at all, for example. In general, the more measuring devices 50 are foreseen, the better results and the higher accuracy of the measurement can be achieved.

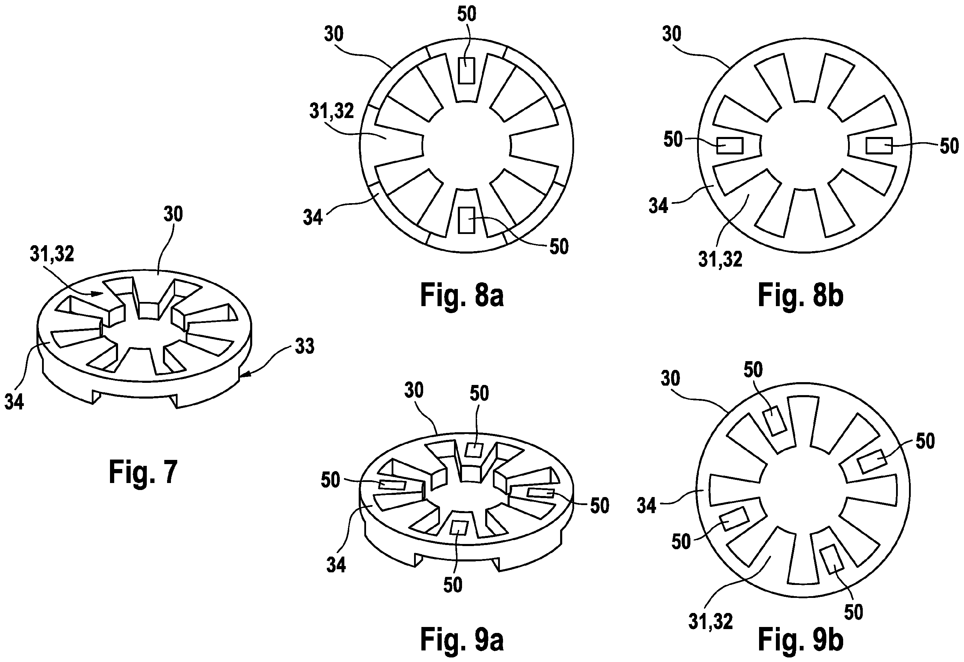

Fig. 7 shows an oblique view of an embodiment of a sensing ring 30. The sensing ring 30 comprises an outer ring portion 34 and in total eight bending elements 31 or beams 32, respectively. The bending elements 31 protrude from the outer ring 34 in the direction of the center of the sensing ring 30. The sensing ring 30 further comprises a resting leg 33. The bottom 13 of the caliper cylinder 10 may comprise corresponding cavities for these legs 33 in order to fix the sensing ring 30 in the caliper cylinder 10.

Fig. 8a shows a bottom view of potential arrangements of measurement devices 50 on the sensing ring 30. In accordance with this exemplary arrangement, two strain gauges on the bottom of the beams 32 may go under compression on application of a load, i.e., when applying a force to the loading ring 20.

Fig. 8b shows a top view of potential arrangements of measurement devices 50 on the sensing ring 30. In accordance with this exemplary arrangement, two strain gauges on the top of the beams 32 may go under tension on application of a load, i.e., when applying a force to the loading ring 20.

Figures 9a and 9b show an oblique view and a top view of a further potential arrangement of measurement devices 50 on the sensing ring 30. Here, in total four strain gauges on the top of the beams 32 going under tension on application of load.

Other embodiments can provide measurement devices 50 on different sides of the beams 32, i.e. on the top and on the bottom side of the beams 32.

When a force Fₐ is applied by the loading ring 20, these beams 32 undergo bending action thus introducing deflection in the strain gauges. This results in change in resistance of the strain gauges that can be measured by a Wheatstone bridge.

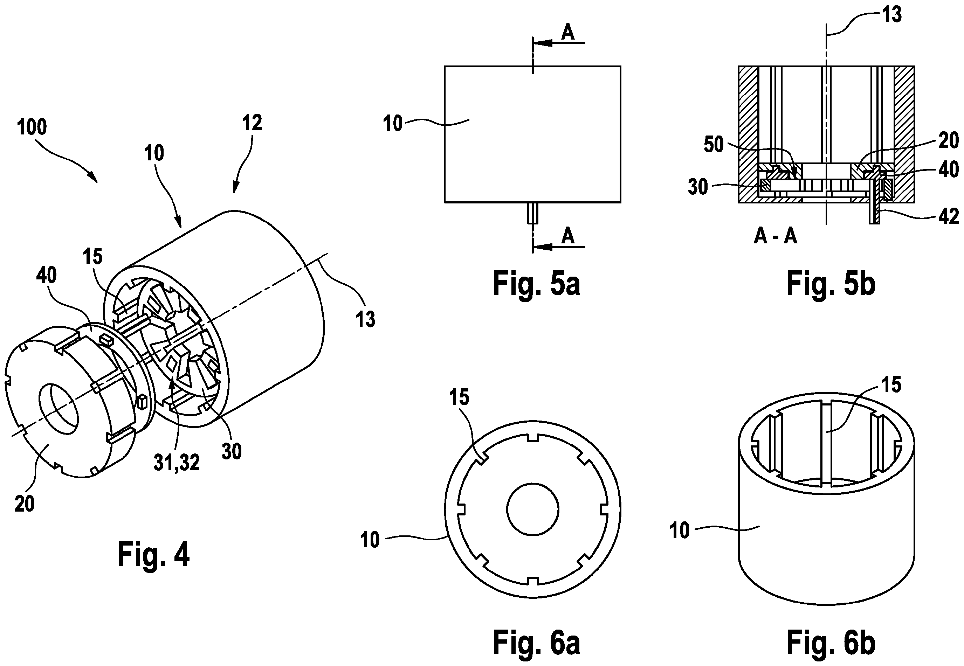

Fig. 4 shows another sectional view of the exemplary electromechanical operable brake caliper 100 of Fig. 1.

Fig. 5a shows a front view of an exemplary embodiment of a caliper cylinder 10, Fig. 5b shows a section view along the section line A-A of the caliper cylinder 10 of Fig. 5a. The measuring device 50 is coupled electrically to the printed circuit board 40. For this reason, the printed circuit board 40 comprised axially protruding contact pins 42 for electrical contacting the printed circuit board 40. In the shown example, some or all of these protruding contact pins 42 are led through an opening in the bottom 14 to the outside of the caliper cylinder 10. Supply voltage and ground can be connected to the Wheatstone bridge configuration (not shown) via two of such contact pins 42, for example.

If the strain gauges are arranged in such a Wheatstone bridge configuration, an output voltage can be provided when there is a change in resistance of the strain gauges due to deflection in the sensing beams 32 because of the load applied.

A third contact pin 42 is provided for such a signal output or the output voltage of the Wheatstone bridge configuration, respectively. If required, the output voltage can be amplified and passed through an analog to digital converter (ADC). The so created value is then sent to an ECU where this value can be mapped to a corresponding force value from a calibration table, for example.

Fig. 6a shows a top view of the caliper cylinder 10 of Fig. 5a, and Fig. 6b presents an isometric view of the caliper cylinder 10 of Fig. 5a.

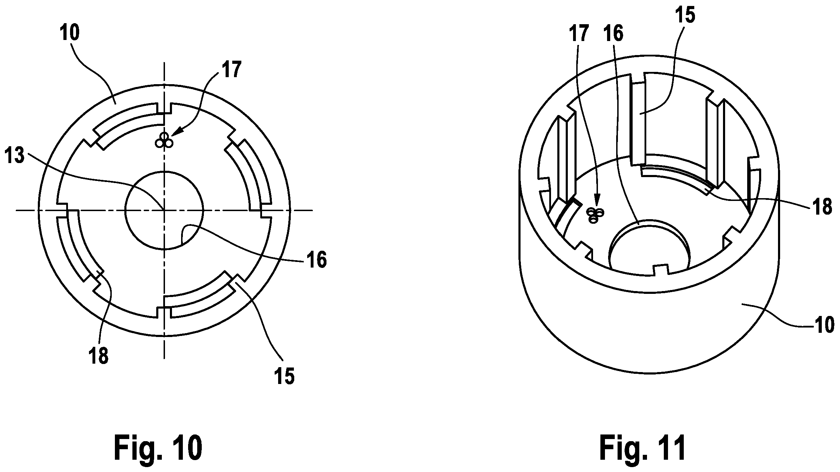

In one preferred embodiments as shown in Fig. 10, the bottom 14 of the caliper cylinder 10 comprises holes 17 for passing through the contact pins 42. Fig. 10 presents a top view of an embodiment of a caliper cylinder 10. Fig. 11 shows an oblique view of the caliper cylinder of Fig. 10.

In one more preferred embodiment of the invention, also shown in Fig. 10, the bottom 14 of the caliper cylinder 10 comprises cavities 18. The cavities 18 are designed corresponding to the resting legs 33 of the sensing ring 30.

The printed circuit board 40 is placed between the loading ring 20 and the sensing ring 30. Such a placement of the printed circuit board 40 reduces the effort for electrical wiring to a minimum. In addition, the printed circuit board 40 is therefore protected against external forces.

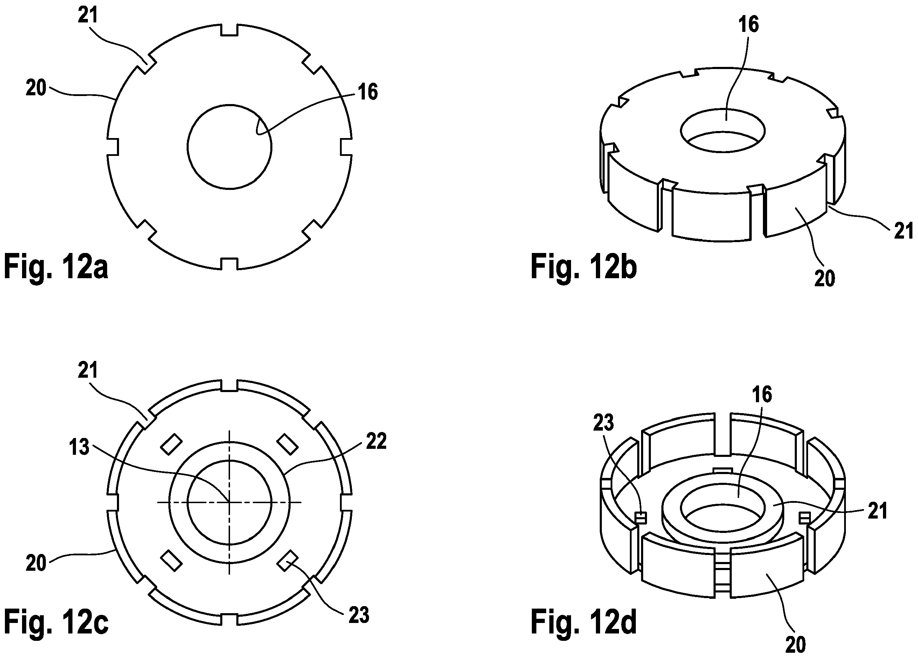

The loading ring 20 comprises an additional loading area 22 which is designed to apply a force directly to the beams 32. Figures 12a, 12b, 12c and 12d show different views of an embodiment of the loading ring 20. Fig. 12a presents a top view of the loading ring 20. The recesses 21 are arranged such that they can couple into the guide bars 15 when the loading ring 20 is inserted into the caliper cylinder 10. Fig. 12b presents an oblique view of the same loading ring 20. Fig. 12c shows a bottom view of the loading ring 20. Here, openings 23 are provided and arranged such that PCB legs 41 of the printed circuit board 40 may fit into them in operation, thereby preventing any rotation. Fig. 12d shows an oblique view of the same loading ring 20.

In Figures 12c and 12d, the axially protruding circular region defining the loading area 22 can be seen. The circular loading area 22 encloses the through-hole 16 of the loading ring 20. The loading area 22 is arranged such that a load from the loading ring 20 can be transferred directly to the bending element 31 of the sensing ring 30. The loading ring 20 has the purpose as a force transferring element and also as a closing cap for the sensor element.

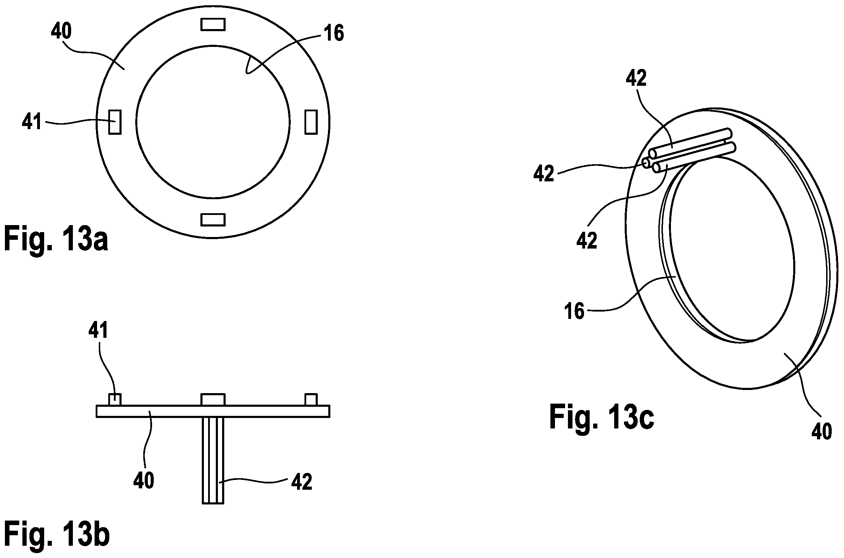

Figures 13a, 13b and 13c show different views of an embodiment of a printed circuit board 40. Fig. 13a show a top view, Fig. 13b a side view and Fig. 13c an oblique view of an exemplary printed circuit board 40. The shown printed circuit board 40 comprises three contact pins 42 that protrude axially. Two such contact pins 42 are for supply voltage and ground and are connected to one part of the Wheatstone bridge and signal output will provide the output voltage of the Wheatstone bridge.

The printed circuit board 40 is not deformable since it is separated with the PCB legs 41. Thus, there will not be any load coming on to the printed circuit board 40. The loading ring 20 has freedom to move a small distance in axial direction which will transfer the load on to sensing ring 30.

In the embodiment, the strain gauges are in a standard full Wheatstone bridge configuration which will provide an output voltage when there is change in resistance of the strain gauges due to deflection in the sensing beams 32 because of the load applied.

This output voltage can be amplified and passed through analog to digital converter (ADC). This ADC value will be then sent to an ECU where it will be mapped to a force value from a calibration table.

As can be seen in the Figures, the bottom 13 of the caliper cylinder 10, the loading ring 20 and the sensing ring 30 all comprise a centric through-hole 16. These through-holes 16 are arranged coaxial to each other, enabling a drive shaft (not shown) for driving an actuator (not shown) of the brake passing through.

The invention also provides a motor vehicle (not shown), comprising at least one electromechanical operable brake caliper 100 as described above, or two such electromechanical operable brake calipers 100 or one for each wheel.

In just another aspect, the invention also provides a method of measuring a force Fₐ in an electromechanical operable brake caliper 100 of a motor vehicle, comprising at least one of the steps of
- applying a force Fₐ to a loading ring 20,
- transferring this force Fₐ to at least one bending element 31, preferably a beam 32, of a sensing ring 30,
- measuring the deflection of the bending element 31 when the force Fₐ is applied to the loading ring 20 by at least one measuring device 50 which is attached to the bending element 31, preferably by multiple strain gauges,
- connecting the strain gauges to a Wheatstone's bridge configuration to provide a signal output in terms of small voltage changes,
- sending the signal output to a printed circuit board 40.

The above-mentioned method may further comprise at least one of the steps of
- comprising an amplifier to increase the signal,
- converting the signal output with ADC into a digital signal form,
- calibrating the brake force to be applied by the brake caliper being measured using these values.

### List of Reference Numerals

- 10: caliper cylinder
- 11: proximal end
- 12: distal end
- 13: body axis
- 14: bottom
- 15: guide bar
- 16: through-hole
- 17: hole
- 18: cavity

- 20: loading ring
- 21: recess
- 22: loading area
- 23: opening

- 30: sensing ring
- 31: bending element
- 32: beam
- 33: resting leg
- 34: outer ring

- 40: printed circuit board
- 41: PCB leg
- 42: contact pin
- 50: measuring device

## Claims

1. Electromechanical operable brake caliper (100), in particular for motor vehicles, comprising:
- a caliper cylinder (10) having a proximal open end (11) and a distal end (12) defining a bottom (14), the distal end and the proximal end further defining a body axis (13),
- a loading ring (20), located inside the caliper cylinder (10) and movable in an axial direction parallel to the body axis (13), the loading ring (20) is able to receive a force Fₐ in operation of the brake caliper assembly,
- a sensing ring (30), located inside the caliper cylinder (10) between the loading ring (20) and the bottom (14), wherein
- the sensing ring (30) comprises at least one bending element (31) which can be deformed when the force Fₐ is applied to,
- the loading ring (20) is designed to transfer the force Fₐ to the bending element of the sensing ring (30) which can cause the at least one bending element (31) to be deformed,
- the sensing ring (30) further comprises at least one measuring device (50) for the detection of stretching and/or compressing deformations, and wherein
- the at least one measuring device (50) is located at or attached to the at least one bending element (31) of the sensing ring (30).

2. Electromechanical operable brake caliper (100) as claimed in claim 1, wherein the bending element (31) comprises a radially inwards projecting beam (32), and wherein the at least one measuring device (50) is located at such a beam (32).

3. Electromechanical operable brake caliper (100) as claimed in any of the preceding claims, wherein the at least one measuring device (50) is located on the side of the beam (32) that is directed to the loading ring (20).

4. Electromechanical operable brake caliper (100) as claimed in any of the preceding claims, wherein the at least one measuring device (50) is located on the side of the beam (32) that is directed to the bottom (14).

5. Electromechanical operable brake caliper (100) as claimed in any of the preceding claims, wherein the number of beams (32) is more than one, preferably two or a multiple of two, and wherein at least two or a multiple of two measuring devices (50) are placed on opposite beams (32) and/or at different sides of the beam (32).

6. Electromechanical operable brake caliper (100) as claimed in any of the preceding claims, wherein the measuring device (50) comprises strain gauges.

7. Electromechanical operable brake caliper (100) as claimed in any of the preceding claims, wherein the loading ring (20) and/or the sensing ring (30) comprise a recess to hold a printed circuit board (40), preferably such that the printed circuit board (40) is located, at least partially, between the loading ring (20) and/or the sensing ring (30).

8. Electromechanical operable brake caliper (100) as claimed in any of the preceding claims, wherein the measuring device (50) is electrically coupled to the printed circuit board (40).

9. Electromechanical operable brake caliper (100) as claimed in any of the preceding claims, wherein the printed circuit board (40) comprises axially protruding contact pins (42) for electrical coupling the printed circuit board (40) and/or the measuring device (50), the contact pins (42) are led through an opening in the bottom (16) to the outside of the caliper cylinder (10).

10. Electromechanical operable brake caliper (100) as claimed in any of the preceding claims, wherein the loading ring (20) comprises at least on loading area (22) which can apply a force from the loading ring (20) directly to the beams (32) of the sensing ring (30), and wherein preferably the loading area (22) comprises an axially protruding circular region.

11. Electromechanical operable brake caliper (100) as claimed in any of the preceding claims, wherein the caliper cylinder (10) comprises axially oriented guide bars (15) which prevent any rotational movement of the loading ring (20) inside the caliper cylinder (10).

12. Electromechanical operable brake caliper (100) as claimed in any of the preceding claims, wherein the bottom (14) and/or the loading ring (20) and/or the sensing ring (30) each comprise a centric through-hole (16) which are coaxial to each other, for passing through a drive shaft.

13. Motor vehicle, comprising at least one electromechanical operable brake caliper (100) as claimed in any of the preceding claims, preferably two such electromechanical operable brake calipers (100) or one for each wheel.

14. A method for measuring a force in an electromechanical operable brake caliper of a motor vehicle, preferably in an electromechanical operable brake caliper (100) as claimed in any of the preceding claims 1 to 12, comprising at least one of the steps of
- applying a force Fₐ to a loading ring (20),
- transferring this force Fₐ to at least one bending element (31), preferably a beam (32), of a sensing ring (30),
- measuring the deflection of the bending element (31) when the force Fₐ is applied to the loading ring (20) by at least one measuring device (50) which is attached to the bending element (31), preferably by multiple strain gauges,
- connecting the strain gauges to a Wheatstone's bridge configuration to provide a signal output in terms of small voltage changes,
- sending the signal output to a printed circuit board (40).

15. The method of the preceding claim, further comprising at least one of the steps of
- comprising an amplifier to increase the signal,
- converting the signal output with ADC into a digital signal form,
- calibrating the brake force to be applied by the brake caliper being measured using these values.
